# EUROPEAN PATENT APPLICATION

(11) **EP 1 612 035 A1**
(43) Date of publication of application: **04.01.2006**
(21) Application number: 04425490.2
(22) Date of filing: 01.07.2004
(51) Int. Cl.: B29D 31/508, A43B 9/18, A43B 23/04

(54) **Method for anchoring a sole of resin to a leather shoe and shoe thus obtained**

(71) Applicant: Vagnoli, Ivano, 56024 Ponte a Egola, S. Miniato (PI) (IT)
(72) Inventor: Vagnoli, Ivano, 56024 Ponte a Egola, S. Miniato (PI) (IT)
(74) Representative: Celestino, Marco

(57) **Abstract**

A shoe (100) is obtained starting from an upper (50) so that no assembling operations are necessary, for example sewing or gluing steps, to complete the shoe. The upper (50) has an inner side (55) and an outer side (56) forming a base (52) provided with a plurality of through holes (51) suitable for receiving a sole of resin. In the upper (50) a counter-sole (40) in plastic resin may be arranged so that it adheres to the inner side (55). The upper (50) has the final shape of the shoe that is being made and is arranged on a support (21), provided on a counter-mould (20), which is associated to a mould of plastic resin injection, so that the base (52) is visible from the outer side (56). Then, counter-mould (20) is coupled to a mould (10) having a plurality of recesses (11) reproducing a predetermined pattern of the sole that is being anchored to the upper (50). Once closed the mould, molten plastic resin is injected which floods the recesses (11) of the mould (10) thus forming the outsole according to the predetermined pattern, and then flows in the holes (51) of the base (52) reaching the counter-sole (40). When hardening, the plastic resin that fills the through holes (51) of the upper (50) creates a mechanical anchoring of the sole (60) to counter-sole (40) and fixes the counter-sole (40) to the inner side of the upper (50).

## Description

### Field of the invention

The present invention relates to the leather industry, in particular leather shoes, and it relates to a method for anchoring soles of resin to the leather shoes.

### Background of the invention

In the following description, the term leather comprises soft skin, thick skin, hide, kid, other kinds of leather as well as imitation leather.

Most of shoes are now made industrially. This allows a wide production of models and different sizes to meet the requirements of the market at reasonable prices. The materials used in the production of shoes are the following: hide and leather, imitation leather, fabrics, rubber, wood, cork, special cardboard and metal pieces; furthermore, other materials are used such as threads, glue, etc., necessary to join different parts of a shoe.

The main working steps in the shoe making process comprise:
- cutting leather and lining material, by means of socket punches, for preparing the uppers;
- cutting the thick skin for preparing the different parts of the bottom (sole, insole, heels, etc.).

Then a plurality of operations follow, carried out by appropriate machines, such as:
- narrowing the edges;
- hemming;
- prearranging the shoe on a last with small nails;
- assembling the upper on the last and injecting reinforcements between lining and upper);
- sewing a strip of soft skin that supports seams to assure impermeability;
- glueing;

and finally some final operations such as:
- drying;
- finishing;
- steaming.

In particular, shoes production systems differ from one another on how the bottom is sewn to the upper. Among the well known systems there are the following:
- Goodyear: sewing the bottom to the upper by a strip of leather, particularly strong, so called welt.
- Blake: sewing method also called in and out seam;
- Ago: gluing the bottom to the upper.

The most critical part of a shoe is definitely the sole or outsole, i.e. the part that touches direct the ground and carries out the twofold function of dampening the walk and having anti-slip action, in addition to assuring an appropriate perspiration of the foot.

Shoe designers are continuously seeking for new shapes of the soles by moulding processes. In many cases shoes are designed with plastic injections in the soles according to fancy patterns that at the same time allow an effective and comfortable walk.

Therefore, the next shoe finishing steps, for example fixing the sole to the upper, by seams or glue between the upper and the sole can be difficult owing to a reduced working surface. So, such operations can oblige the designers to follow traditional structures.

### Summary of the invention

It is therefore a feature of the present invention to provide a method for anchoring soles of plastic resin to leather shoes that provides a steady fastening of the sole to the leather upper without the need of gluing and/or sewing the sole and the upper.

It is another feature of the present invention to provide a method for anchoring soles of plastic resin to leather shoes for increasing the process productivity.

It is a further feature of the present invention to provide a leather shoe that has a sole of plastic resin steadily fixed to the leather same.

These and other features are accomplished with one exemplary method for anchoring a sole of plastic resin to a shoe, whose main feature is that it comprises the steps of:
- preparing an upper comprising a base having an inner side and an outer side;
- making a plurality of through holes in said base;
- prearranging a counter-mould having a support for the upper;
- arranging the upper on the support so that the outer side of the base remains exposed outwards and the inner side of the base faces the support;
- closing the counter-mould with a mould having at least one recess reproducing a predetermined pattern of a sole, the outer side of the base facing on said recess;
- injecting the plastic in the mould, the resin flooding the or each recess to make the sole according to the predetermined pattern, and flowing through the holes of the base up to adhering at least in part to the inner side of the base;
- hardening the plastic resin, whereby the portion of hardened resin that fills the or each recess forms the sole and the portion of hardened resin that fills the through holes of the upper and remains on the inner side of the base creates a mechanical anchoring of the upper to the sole.

Advantageously, before arranging the upper on the support a step is provided of:
- arranging a counter-sole of plastic resin anchored to the inner side of the base, said counter-sole facing the surface of the support.

Preferably, the counter-sole has at least one reference bolt suitable for being put into a through hole of the base for keeping it in position during the resin injection step.

Advantageously, the counter-sole has at least one recess in which the molten plastic resin flows during the injection in the through holes of the upper and when hardening adheres to the counter-sole and to the inner side of the base.

In particular, the upper put into the mould has already the final shape of the upper part of the shoe. In other words, once extracted the shoe from the mould no further finishing works are necessary, for example seams, to obtain the final shape of the shoe.

Advantageously, each support is provided movable with respect to the mould about a pivot to assist the arrangement of the upper on the support same.

In a possible exemplary embodiment of the invention, between the mould and the counter-mould an interposition element can be provided.

The plastic resin can be injected through a plurality of holes provided on the mould at the or each recess reproducing the predetermined pattern of the sole.

According to another aspect of the invention, a shoe comprises an upper provided of:
- a base having an inner side and an outer side communicating through a plurality of through holes executed in the base;
- a counter-sole of plastic resin arranged on the inner side of the base suitable for anchoring to the base at the holes ad
- a plastic resin injected sole anchored to the second side of the base and joined to the counter-sole through the holes.

### Brief description of the drawings

Further characteristics and the advantages of the method, according to the invention, for anchoring soles of plastic resin to leather shoes will be made clearer with the following description of an exemplary embodiment thereof, exemplifying but not limitative, with reference to the attached drawings, in which like reference characters designate the same or similar parts, throughout the figures of which:
- figure 1 shows a perspective elevational side view of an upper that can be used to provide the shoe according to the present invention;
- figure 2 shows a perspective view of a possible exemplary embodiment of a counter-sole, according to the invention;
- figure 3 shows a perspective elevational side view of the step of injecting the counter-sole of figure 2 in the upper of figure 1;
- figure 4 shows a perspective elevational side view of the upper of figure 1 having inside the counter-sole of figure 2;
- figure 5 shows a perspective view of a mould to make the sole according to the invention;
- figure 6 shows a perspective view of a counter-mould engageable with the mould of figure 5;

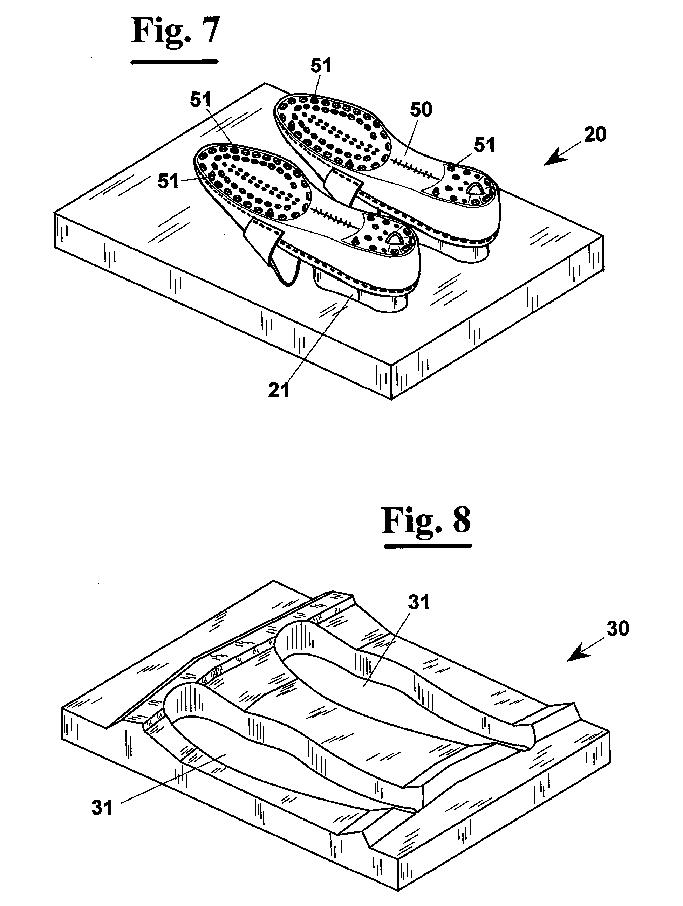

- figure 7 shows a perspective view of the step of arranging the uppers of figure 1 onto the supports of the counter-mould of figure 6;
- figure 8 shows a perspective view of an interposition element between the mould of figure 5 and the counter-mould of figure 6;

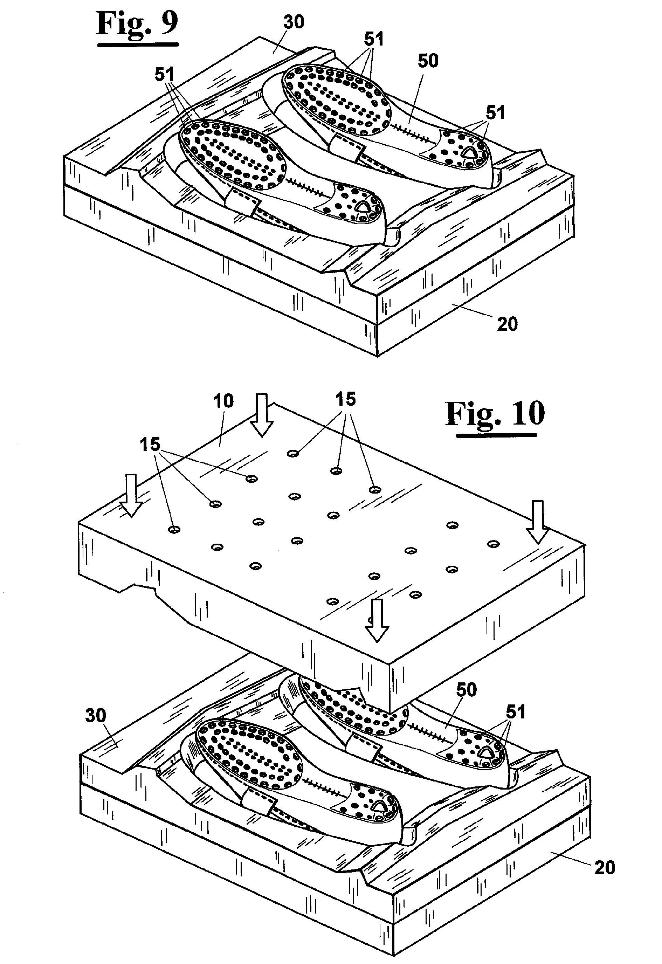

- figure 9 shows a perspective view of the assembling the interposition element of figure 8 and the counter-mould of figure 6;
- figure 10 shows a perspective view of assembling the mould of figure 5 with the interposition element of figure 8 and with the counter-mould of figure 6;
- figure 11 shows a perspective elevational side view of a shoe with a sole of plastic resin obtainable with the method according to the invention;
- figures 12 and 13 show cross sectional views the moulds 10 assembled to the relative counter-moulds 20, to provide the shoe 100 of figure 11 in two different ways.

### Description of a preferred exemplary embodiment

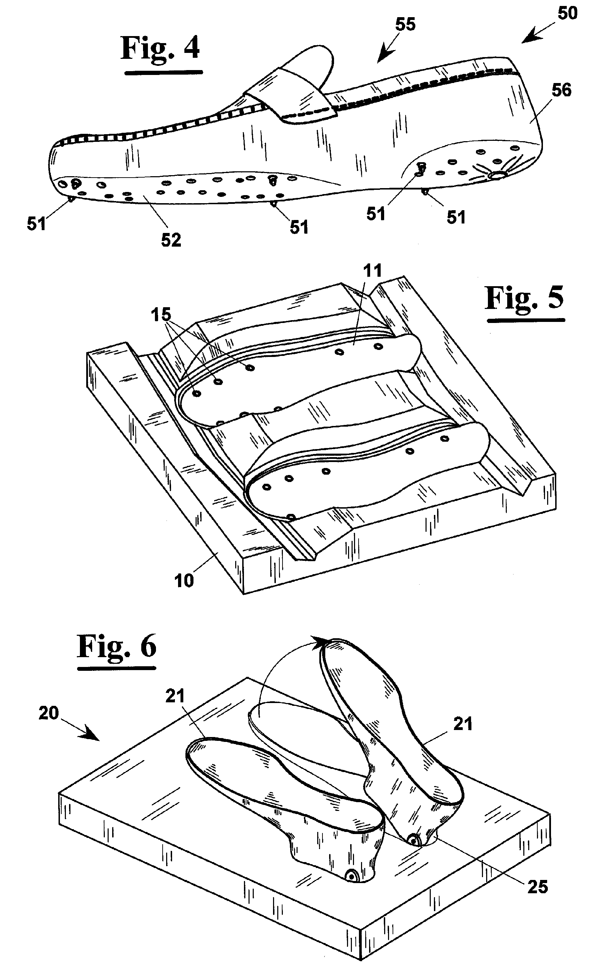

With reference to figures from 1 to 11 the method for anchoring soles of resin to shoes, in particular leather shoes, according to the present invention, provides the succession of steps described hereafter. Starting from a leather upper 50, having an inner side 55 and an outer side 56 and having a base 52 provided with a plurality of through holes 51 suitable for receiving the sole of resin, in upper 50 same a counter-sole 40 in plastic resin is arranged so that it adheres to the inner side 55 (figure 4).

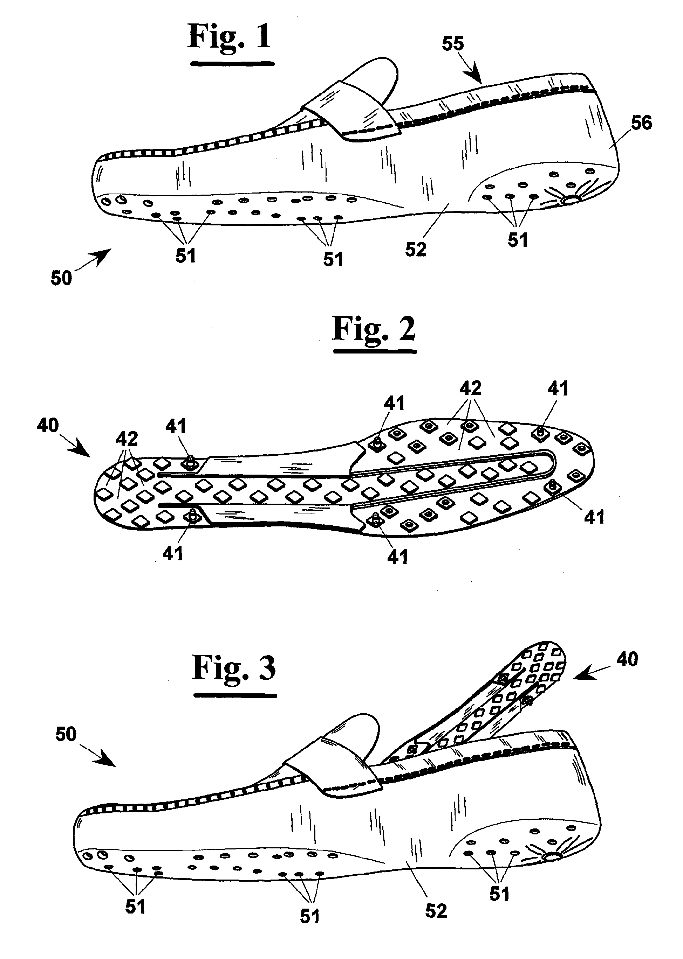

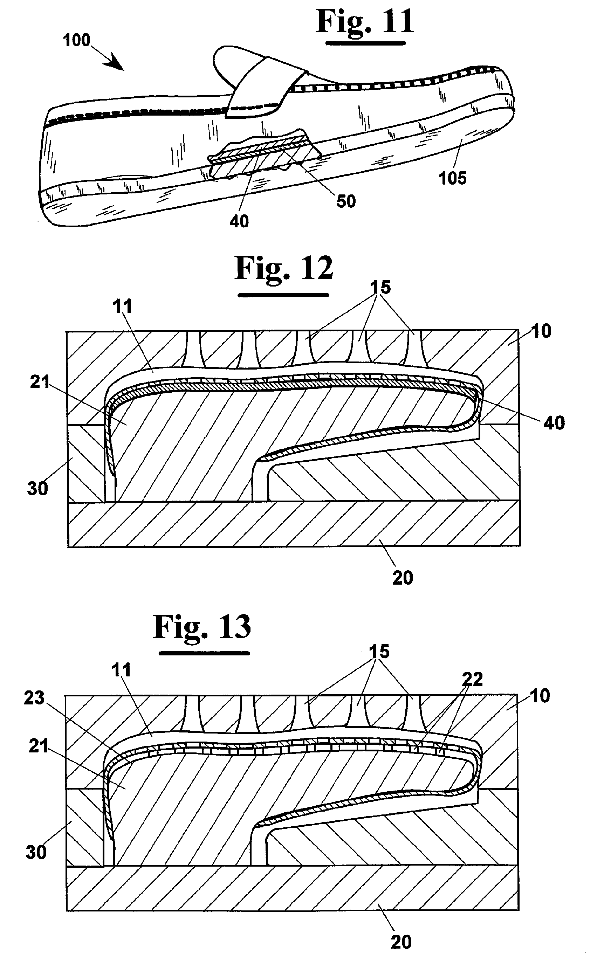

In particular, as shown in figure 2, counter-sole 40 has a plurality of reference pins 41, for example six, which in use cross base 52 of upper 50 at holes 51 in order to keep it in position during the next step of injecting the molten plastic resin in the mould. The upper 50, having the final shape of the shoe 100 (figure 11) that is being made, and counter-sole 40 are then arranged on a support 21, provided on a counter-mould 20, which is associated to a mould of plastic resin injection, so that base 52 is visible from the outer side 56 (figure 8). The step of arranging upper 50 on support 21 is assisted by the fact of moving the support with respect to mould 20 about a pivot 25, for example a hinge, to assist the arrangement of the upper on support 21 same and its following extraction, as described hereinafter.

Then, counter-mould 20 is coupled to a mould 10 having a plurality of recesses 11 reproducing a predetermined pattern of the sole that is being anchored to the upper 40 of shoe 50. In particular, in an exemplary embodiment shown in the figures, between mould 10 and counter-mould 20 an interposition element 30 is provided, having apertures 31 at support 21 of counter-mould 20 (figure 8).

Once closed the mould, molten plastic resin is injected through, for example, holes 15. The resin floods the recesses 11 of mould 10 thus forming the outsole according to the predetermined pattern, and flowing in holes 51 of base 52 it reaches counter-sole 40. In particular, the plastic resin flows in grooves 42 present on the surface of counter-sole 40 and remains on the inner side 55 of the upper 50. Therefore, when hardening, the plastic resin that fills the through holes 51 of upper 50 creates a mechanical anchoring of the sole 60 to counter-sole 40, whereas the plastic hardened resin that fills the grooves 42 fixes counter-sole 40 to the inner side of the upper 50.

The shoe 100 that is obtained from the process above described is shown in figure 11. Since upper 50 put in counter-mould 20 has already the shape of the shoe 100 that is being made no assembling operations are necessary, for example sewing or gluing steps, to complete the shoe.

In figures 12 and 13 a cross sectional view is shown of mould 10 assembled to the relative counter-mould 20, to provide the shoe 100 of figure 11 in two different ways.

In particular, in figure 12 a cross sectional view is shown of mould 10 assembled to the relative counter-mould 20 and where upper 50 is mounted on support 21 counter-sole 40 inside, according to the process above described.

In figure 13, instead, upper 50 is put on support 21 without counter-sole 40 inside. More in detail, the counter-sole is made at the same time of sole 105 during the step of injecting plastic resin in the mould. This is made by spacers 22 that are arranged between support 21 and upper 50, thus keeping upper 50 in correct position, tensioning it and leaving space 23 free in which the plastic resin flows that once hardened forms counter-sole 40.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for anchoring a sole of resin to a shoe **characterised in that** it comprises the steps of:
- preparing an upper comprising a base having an inner side and an outer side;
- making a plurality of through holes in said base;
- prearranging a counter-mould having a support for the upper;
- arranging the upper on the support so that the outer side of the base remains exposed outwards and the inner side of the base faces the support;
- closing the counter-mould with a mould having at least one recess reproducing a predetermined pattern of a sole, the outer side of the base facing on said recess;
- injecting the plastic in the mould, the resin flooding the or each recess to make the sole according to the predetermined pattern, and flowing through the holes of the base up to adhering at least in part to the inner side of the base;
- hardening the plastic resin, whereby the portion of hardened resin that fills the or each recess forms the sole and the portion of hardened resin which fills the through holes of the upper and remains on the inner side of the base forms a mechanical anchoring of the upper to the sole.

2. Method, according to claim 1, wherein before said step of arranging said upper on said support a step is provided of:
- arranging a counter-sole of plastic resin anchored to said inner side of said base, said counter-sole resulting next to the surface of said support.

3. Method, according to claim 1, wherein said counter-sole has at least one reference bolt suitable for being put into a through hole of said base for keeping it in position during said resin injection step.

4. Method, according to claim 1, wherein said counter-sole has at least one recess in which the molten plastic resin flows during said injection step, reaching said through holes of said base where when hardening adheres to said counter-sole and to said inner side of said base.

5. Method, according to claim 1, wherein said or each support is provided movable with respect to said mould about a pivot to assist the arrangement of said upper on said support.

6. Method, according to claim 1, wherein between said mould and said counter-mould an interposition element is provided.

7. Method, according to claim 1, where the plastic resin is injected through a plurality of holes provided on the counter-mould at said or each recess reproducing said predetermined pattern of said sole.

8. Shoe **characterised in that** it comprises an upper provided of:
- a base having an inner side and an outer side communicating through a plurality of through holes executed in the base;
- a counter-sole of plastic resin arranged on the inner side of the base suitable for anchoring to the base at the holes ad
- a plastic resin injected sole anchored to the second side of the base and joined to the counter-sole through the holes.
